(19) Europäisches Patentamt
European Patent Office
Office européen des brevets

(11) **EP 2 987 651 B1**

(12) **EUROPEAN PATENT SPECIFICATION**

(45) Date of publication and mention
of the grant of the patent:
**30.05.2018 Bulletin 2018/22**

(51) Int Cl.:
***B60C 11/00*** *(2006.01)*

(21) Application number: **14785598.5**

(86) International application number:
**PCT/JP2014/001908**

(22) Date of filing: **01.04.2014**

(87) International publication number:
**WO 2014/171089 (23.10.2014 Gazette 2014/43)**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2013 JP 2013085881**

(43) Date of publication of application:
**24.02.2016 Bulletin 2016/08**

(73) Proprietor: **Bridgestone Corporation
Tokyo 104-8340 (JP)**

(72) Inventor: **HASHIMOTO, Kento
Kodaira-shi
Tokyo 187-8531 (JP)**

(74) Representative: **Oxley, Robin John George
Marks & Clerk LLP
90 Long Acre
London WC2E 9RA (GB)**

(56) References cited:
**JP-A- H 071 907       JP-A- H0 565 003
JP-A- H05 147 412    JP-A- H07 186 633
JP-A- 2003 127 617  JP-A- 2007 131 084
JP-A- 2007 131 084  JP-A- 2007 176 417
US-A- 5 840 137**

**Description**

TECHNICAL FIELD

This disclosure relates to a tire that stably exhibits excellent on-ice performance, which is a combination of braking performance and driving performance, on the ice road surface from the beginning of its use.

BACKGROUND

Under the circumstances where the use of studded tires is restricted, as an alternative for the studded tires, what is called a studless tire has been developed. In this studless tire, in order to improve its on-ice performance, improvements have been made particularly to a tread surface. In general, on the ice road surface, heat generated by the friction between a tread surface and a road surface causes a water film therebetween, which results in decrease in the friction force between the tire and the road surface and causes the on-ice performance to drop. Thus water film removal capability and edge component are added to the tread to improve the on-ice performance.

For example, in order to improve the water film removal capability of the tread, applying foamed rubber to the tread is effective. As a tire with a tread to which foamed rubber is applied, JP2005-041924A (PTL 1) discloses a tire with tread rubber composition composed by blending fine particle containing fiber and non fine particle containing fiber at a favorable ratio. This tire exhibits a water film removal capability by exposing air bubbles of foamed rubber on the surface of the tread, and in addition to this, it has fine particles with Mohs hardness greater than the ice on its ground contact surface, thereby obtaining the edge effect and the stud effect and ensuring a total on-ice performance. Also disclosed is a tire structured so that rubber layers having different mean rates of foaming are laid on the tread part in which the mean rate of foaming of at least the facial rubber layer contacting with the road surface is made highest (PTL 2). Also disclosed is a composite tread structure comprising a low modulus at -20 °C rubber outer layer and a high modulus at -20 °C rubber inner layer, thicker than the outer layer (PTL 3). Also disclosed is a pneumatic tire, on the tread face of which main grooves extending in the peripheral direction of the tire and auxiliary grooves crossing the main grooves are provided and many blocks surrounded by these main grooves and auxiliary grooves 3 are formed, the blocks comprise an inside rubber layer made of foamed rubber of 60 to 66 in JIS hardness and an outer rubber layer made of non-foamed rubber harder of 66 to 72 in JIS hardness than this inside rubber layer, and covering the inside layer covered by 1 to 3mm in thickness, and a kerf crossing the surface of the blocks in the peripheral direction of the tire (PTL 4). JPH07-186633 discloses a tire in which fine ribs having a nearly rectangular shape are formed on the tread surface of each block.

CITATION LIST

Patent Literature

PTL 1: JP2005-041924A

PTL 2: JP2007-131084A

PTL 3: US5840137A

PTL 4: JP H05 147412A

SUMMARY

(Technical Problem)

However, besides the above-mentioned example, in a tire with a tread to which foamed rubber is applied, the foaming ingredient on the tread surface in contact with a mold is generally evaporated due to the heat of the mold in the tire vulcanization molding process using a mold, which causes the vicinity of the tread surface of the tire to be non-foaming or low-foaming, thus the desired performance cannot be obtained with newly produced tires at the beginning of their use. Thus, the on-ice performance of tires at the initial stage of their use has been compensated by other means such as fine grooves provided on the tread surface or the like.

Therefore, we provide a tire with a tread to which foamed rubber is applied that stably exhibits excellent on-ice performance, which is a combination of braking performance and driving performance, on the ice road surface from the beginning of its use.

(Solution to Problem)

The inventors thoroughly investigated how to ensure the initial performance of a tire with tread to which foamed rubber is applied, and as a result, discovered that the desired on-ice performance was not sufficiently obtained with this type of tire in its newly produced state due to the fact that the vicinity of the tread surface has a high elastic modulus, thus not allowing to obtain sufficient ground contact surface, rather than the fact that the vicinity of the tread surface becomes low-foaming or non-foaming, thus not allowing to sufficiently ensure the water film removal capability.

In other words, the inventors made a discovery that, in order to ensure the initial performance until foamed rubber is exposed, it is effective to favorably define an elastic modulus of the rubber on the tread surface that forms the vicinity of the ground contact surface while the tire is in a newly produced state.

The disclosed tire has a surface rubber layer that forms, on a tread of the tire, at least a ground contact surface of the tread; and an inner rubber layer that is formed of foamed rubber and is adjacent to the inward of the surface rubber layer in the tire radial direction, and the elastic modulus of rubber of the surface rubber layer $M_s$ is lower than that of the inner rubber layer $M_i$, the surface rubber layer is made of a non-foaming rubber .

The disclosed tire having the above-described construction stably provides excellent on-ice performance from the beginning of its use.

Note that, in this disclosure, the elastic modulus of rubber means an elastic modulus of rubber in the stretching direction. The elastic modulus is calculated from a stress obtained by inputting frequency displacement into broached surface rubber.

In the disclosed tire, the ratio of the elastic modulus of rubber of the surface rubber layer $M_s$ to the elastic modulus of rubber of the inner rubber layer $M_i$, $M_s/ M_i$, is preferably 0.01 or more and less than 1.0.

In this case, a favorable elastic modulus is applied to the tread surface to provide further improved on-ice performance at the beginning of use of the tire.

Furthermore, in the disclosed tire, the thickness of the surface rubber layer is preferably 0.01 mm or more and 1.0 mm or less.

With this construction, a sufficient ground contact area of the tread can be ensured at the initial stage of use of the tire, and early emergence of the inner rubber layer can be realized, thereby providing on-ice performance more stably.

In the disclosed tire, the tread has a stacked structure in which a cap portion that is adjacent to outward of a base portion in the tire radial direction and forms at least a ground contact surface of the tread is disposed. The cap portion preferably includes the surface rubber layer and the inner rubber layer.

In this case, a favorable rigidity is provided, thereby allowing for balancing between acceleration/deceleration performance and motion performance.

(Advantageous Effect)

This disclosure provides a tire that stably exhibits excellent on-ice performance from the beginning of its use and has a tread to which foam rubber is applied.

BRIEF DESCRIPTION OF THE DRAWINGS

In the accompanying drawings:

FIG. 1 is a half cross-sectional view in the tire width direction according to the First Embodiment;
FIG. 2 is an enlarged cross-sectional view, cut in the tire width direction, of the vicinity of ground contact surface of a tread of the tire according to the First Embodiment; and
FIG. 3 is an enlarged cross-sectional view, cut in the tire width direction, of the vicinity of ground contact surface of a tread of the tire according to the Second Disclosure, as described herein.

DETAILED DESCRIPTION

The following describes the disclosed tire in detail by illustrating its embodiments with reference to the drawings.

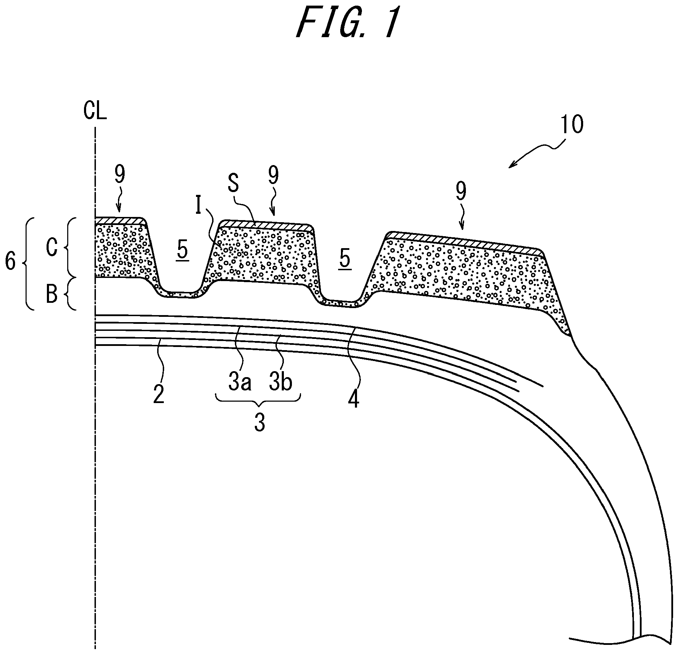

FIG. 1 illustrates a half cross-sectional view in the tire width direction according to the First Embodiment. A tire 10 has a carcass 2 of at least one layer (one layer in the illustrated example) toroidally extending between a pair of bead cores (not illustrated), an inclined belt 3 formed of two-layered inclined belt layers 3a and 3b disposed outward of the carcass 2 in the tire radial direction, one-layered circumferential belt 4 disposed outward of the inclined belt 3 in the tire radial direction, and a tread 6 formed of tread rubber disposed outward of the circumferential belt 4 in the tire radial direction.

The tread 6 is partitioned into a plurality of land portions 9 by grooves extending in the tire circumferential direction and/or lateral direction (in FIG. 1, grooves 5 extending in the tire circumferential direction), and the land portion 9 is formed of a surface rubber layer S that forms its ground contact surface and an inner rubber layer I that is adjacent to the inside of the surface rubber layer S in the tire radial direction and is formed of foamed rubber.

The surface rubber layer S gradually wears down during drive of the tire 10 at its initial stage of use and is worn out, then as the wear of the surface rubber layer S progresses, the inner rubber layer I is gradually exposed on the ground contact surface of the tread 6. This inner rubber layer I is a foamed rubber layer formed by dispersing numerous air bubbles in the tread rubber, and a micro depression is formed on the tread surface by numerous air bubbles sequentially exposed as the ground contact surface wears down. As a result of this, water film removal capability and edge component are given. Therefore, during the initial stage of use until the inner rubber layer I is exposed, the surface rubber layer S assumes a role of on-ice performance.

In that case, it is important that the elastic modulus of rubber of the surface rubber layer S, $M_s$, is lower than the elastic modulus of rubber of the inner rubber layer I, $M_i$. This is because, when the surface rubber layer S with an elastic modulus lower than that of the inner rubber layer I is disposed on the ground contact surface, the ground contact area on the ice, which was not sufficiently obtained by the conventional tire, can be ensured, and sufficient on-ice performance can be obtained at the initial stage.

In particular, like most recent vehicles, in vehicles with antilock braking system (ABS), a ground contact surface of a tread is always updated without wheels being locked when a vehicle is braked, thus, compared to the vehicles with a conventional brake, it is less likely that water film is interposed between the road surface and the tire surface when the vehicle drives on the ice road surface. In consideration of such circumstances, if a contact area larger than the above described contact area is ensured, it is effective to obtain excellent on-ice performance at the initial stage of use of a tire, as is the case where the tread surface is foamed to improve the water film removal capability.

In this manner, with the disclosed tire 10, excellent on-ice performance can be ensured from the beginning of use of the tire.

Furthermore, as described above, in general, in a tire with a tread to which foamed rubber is applied, the foaming ingredients on the tread surface in contact with a mold are evaporated due to heat of the mold in the tire vulcanization molding process using a mold, which causes the vicinity of the tread surface to be low-foaming or non-foaming and to be high elastic modulus as well.

In this regard, in the disclosed tire 10, the surface rubber layer S is disposed on the surface layer of the tread 6, that is, when the tire 10 is vulcanized, a low-elastic rubber material is disposed outward of the rubber material to be foamed to mold, thus a rubber to be served as a surface rubber layer S is interposed between the mold and the foamed rubber material to be served as an inner rubber layer I, thereby direct contact between them is avoided. Thus the heat from the mold side is not transferred to the rubber material to be served as an inner rubber layer I more than necessary. As a result of this, increase in elastic modulus in the vicinity of the surface of the inner rubber layer I and unbalanced foaming ratio of the inner rubber layer I between outside and inside in the tire radial direction can be suppressed. Thus, immediately after the surface rubber layer S is worn out, excellent on-ice performance can be stably obtained in a continuous manner.

Furthermore, when the elastic modulus of rubber of the surface rubber layer S, $M_s$, is lower than the elastic modulus of rubber of the inner rubber layer I, $M_i$, it is advantageous in that, after beginning of use of the tire 10, the surface rubber layer S is worn out in a relatively short period of time. In other words, the inner rubber layer I is exposed at an early stage, thus the original tire performance of the tire 10 can be emerged early.

In addition, the surface rubber layer S may only have elastic modulus lower than that of the inner rubber layer I, and if this condition is satisfied, its raw material rubber compounding is not particularly limited, which allows for rubber compounding design in consideration of rolling resistance performance and other performances, and rubber compounding can be selected depending on the desired performance of the tire.

A favorable raw material rubber compounding of the surface rubber layer S is the same as the normal rubber compounding regardless of foaming or non-foaming.

In the disclosed tire, the ratio of the elastic modulus of rubber of the surface rubber layer S, $M_s$, to the elastic modulus of rubber of the inner rubber layer I, $M_i$, is preferably 0.01 or more and less than 1.0.

When $M_s/M_i$ is 1.0 or more, the surface becomes too hard to exhibit sufficient on-ice performance. In addition, when $M_s/M_i$ is less than 0.01, the surface is too soft, which declines the motion performance and causes the edge component to be insufficient, thus leading to a decline in on-ice performance.

Note that, if $M_s/M_i$ is 0.01 or more and 0.8 or less, it is effective for obtaining excellent on-ice performance.

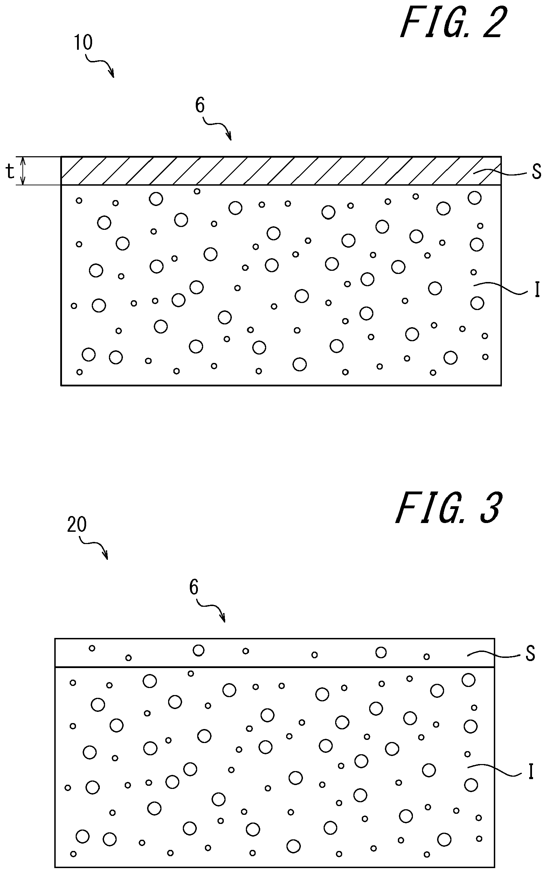

Furthermore, the thickness t (see FIG. 2) of the surface rubber layer S of the disclosed tire is preferably 0.01 mm or more and 1.0 mm or less.

If the thickness of the surface rubber layer S is 0.01 mm or more, a sufficient ground contact area can be ensured at the initial stage of use, thus excellent on-ice performance can be obtained. In this manner, disposal of a rubber with a thickness that allows the thickness of the surface rubber layer of a product tire to be 0.01 mm or more may suppress increase in elastic modulus of the vicinity of the surface of the inner rubber layer I due to vaporization of foaming ingredients of rubber material, which will be the inner rubber layer I, by heat of a mold during vulcanization of the tire 10, and unbalanced expansion ratio of the inner rubber layer I between outside and inside in the tire radial direction, or the like.

Furthermore, the thickness of the surface rubber layer S may be preferably 0.2 mm or more and 0.5 mm or less.

On the other hand, if the thickness t of the surface rubber layer S is 1.0 mm or less, early emergence of the inner rubber layer I can be expected while obtaining excellent on-ice performance at the initial stage of use of the tire.

Note that the thickness of the inner rubber layer I can be appropriately determined depending on the size, pattern, or the like, of the tire.

Furthermore, as illustrated in FIG. 1, the tread 6 of the disclosed tire may be formed into a stacked structure that includes a base portion B and a cap portion C that is adjacent outward of the base portion B in the tire radial direction and forms a ground contact surface of the tread 6. When this cap and base structure is used, the cap portion C may preferably include the surface rubber layer S and the inner rubber layer I formed of foamed rubber.

If the tread 6 is entirely formed of the cap portion C, acceleration/deceleration performance on the ice road surface may be improved. However, motion performance may decline due to low rigidity. Thus, if the base B possesses a certain amount of rigidity, the acceleration/deceleration performance and the motion performance can be balanced.

Note that, for example, rubber with excellent abrasion resistance may be disposed on the cap portion C excluding the surface rubber layer S, and low exothermic rubber may be disposed on the base portion.

As illustrated in FIG. 1, the cap portion C may include only the surface rubber layer S and the inner rubber layer I formed of foamed rubber, or may include, inward of the inner rubber layer I in the tire radial direction, another rubber layer adjacent to the base B. Alternatively, the inner rubber layer I may be disposed across the cap portion C and the base portion B.

Furthermore, in the disclosed tire, when the tread 6 is formed into a stacked structure that includes the base portion B and the cap portion C, as described above, the elastic modulus of rubber of the surface rubber layer S, $M_s$, is preferably lower than the elastic modulus of rubber of the base portion B, $M_b$. This is because on-ice performance is improved by making the surface rubber layer S softer and motion performance is improved by making the base B harder to ensure rigidity.

Next, FIG. 3 illustrates an enlarged cross-sectional view, cut in the tire width direction, of the vicinity of the ground contact surface of the tread 6 of the tire 20 according to the Second Disclosure, as described herein. As in the case of the tire 10 illustrated in FIG. 2, the tire 20 has the surface rubber layer S disposed on the ground contact surface of the tread 6 and the inner rubber layer I formed of foamed rubber disposed adjacent inward of the surface rubber layer S in the tire radial direction. However, here, the surface rubber layer S is formed of foamed rubber. In this manner, the surface rubber layer S may include foamed rubber over a part or all thereof. Here, it is also important that the elastic modulus of rubber of the surface rubber layer S, $M_s$, is lower than the elastic modulus of rubber of the inner rubber layer I, $M_i$.

In this manner, in the tire 20 with a foamed surface rubber layer S, as in the case of the conventional tire in which foamed rubber is exposed on the ground contact surface of a newly produced tire, the foaming ingredients of the surface rubber layer S may be vaporized during vulcanization molding, and the elastic modulus of the ground contact surface of the tread 6 may increase. However, regardless of whether the surface rubber layer S is foamed rubber or non-foamed rubber, as in the case of the tire according to the First Embodiment, the above described effect of this disclosure can be obtained by allowing the elastic modulus of the surface rubber layer S to be lower than that of the inner rubber layer I.

The tire 10 and the tire 20 of this disclosure having the surface rubber layer S with a low elastic modulus disposed on the ground contact surface of the tread 6 are vulcanized by stacking rubber material that is different from that for the inner rubber layer I.

Note that, in consideration of preventing deterioration of motion performance and fracture characteristics due to increase in fracture performance caused by decline of rigidity of the tread 6, the mean foaming ratio of the surface rubber layer S may preferably be less than 40%.

Note that, the mean foaming ratio of the inner rubber layer I may preferably be 3% or more and less than 40% to obtain excellence on-ice performance of the inner rubber layer I.

Note that the foaming ratio V is calculated by using the following formula:

【Formula 1】

$$V = (\rho_0 / \rho_1 - 1) \times 100 \ (\%)$$

where $\rho_1$ is density (g/cm$^3$) of the foamed rubber (rubber after vulcanization) and $\rho_0$ is density (g/cm$^3$) of solid phase portion of the foamed rubber (rubber after vulcanization). Note that the density of the foamed rubber and the density of the solid phase portion of the foamed rubber can be calculated from measurement of the mass in ethanol and the mass in the air, for example.

Note that, in light of the productivity of tire, the surface rubber layer S is non-foamed rubber. This is because non-foamed rubber may allow for a simpler compounding of rubber material, thus the production cost can be saved. In addition, with non-foamed rubber, it is less likely that rubber debris clogs in a mold for molding tires during vulcanization, thus it is advantageous in that the number of cleanings of the mold can be reduced and deformation of the mold around a spew is less likely to occur.

In FIG. 1, although the surface rubber layer S is disposed only on a portion that forms at least the ground contact surface of the tread 6, in addition to this region, the surface rubber layer may extend to the groove wall surface or the groove bottom of the circumferential groove 5 of the tread 6, for example.

EXAMPLE

The following describes an example of this disclosure.

Inventive example tires 1 to 16, comparative example tires 1 to 5 and conventional example tire (tire size for all example tires is 195/65R15) were produced as samples according to the specifications illustrated in Table 1 to evaluate on-ice performance at each stage of drive of distance illustrated in Table 1.

(On-ice performance)

Each sample tire is seated on an applicable rim, filled with internal pressure of 240 kPa, and mounted on a vehicle with ABS brake to evaluate on-ice performance on the ice road with the ice temperature of -1°C, at each stage, such as a newly-produced stage, a stage after 200 km drive and a stage after 500 km drive. On-ice performance was evaluated by indexing the braking distance of the conventional tire when the vehicle is suddenly braked from the speed of 20km/h as 100. The results are shown in Table 1, in which the larger the values, the greater the on-ice performance.

The conventional tire has the same structure as that of the tire according to the First Embodiment of this disclosure illustrated in FIG. 1, except that the cap portion of the tread thereof is formed only of foamed rubber, and the elastic modulus of the rubber in the vicinity of the ground contact surface of the tread in a newly-produced state is higher than the elastic modulus of the rubber inside the tread.

Note that the applicable rim is an industrial standard effective in each region where tires are produced and used, and is a standard rim of applicable size described in JATMA YEAR BOOK (Japan), ETRTO STANDARD MANUAL (Europe) and TRA YEAR BOOK (USA), or the like.

[Table 1]

| | | Conventional tire | Inventive tire 1 | Inventive tire 2 | Inventive tire 3 | Inventive tire 4 | Inventive tire 5 | Inventive tire 6 | Inventive tire 7 | Inventive tire 8 | Comparative tire 1 | Comparative tire 2 |
|---|---|---|---|---|---|---|---|---|---|---|---|---|
| Elastic modulus ratio Ms/Mi | | 1.000 | 0.008 | 0.008 | 0.010 | 0.010 | 0.080 | 0.080 | 0.990 | 0.990 | 1.200 | 1.200 |
| Thickness of surface rubber layer S (mm) | | - | 0.008 | 1.200 | 0.008 | 1.200 | 0.008 | 1.200 | 0.008 | 1.200 | 0.008 | 1.200 |
| On-ice performance | Newly produced state | 100 | 115 | 101 | 117 | 103 | 120 | 111 | 117 | 101 | 85 | 73 |
| | after 200km drive | 100 | 100 | 103 | 100 | 106 | 100 | 111 | 100 | 101 | 98 | 74 |
| | after 500km drive | 100 | 100 | 100 | 100 | 100 | 100 | 100 | 100 | 100 | 100 | 75 |

| | | Inventive tire 9 | Inventive tire 10 | Inventive tire 11 | Inventive tire 12 | Inventive tire 13 | Inventive tire 14 | Inventive tire 15 | Inventive tire 16 | Comparative tire 3 | Comparative tire 4 | Comparative tire 5 |
|---|---|---|---|---|---|---|---|---|---|---|---|---|
| Elastic modulus ratio Ms/Mi | | 0.495 | 0.495 | 0.495 | 0.495 | 0.495 | 0.495 | 0.495 | 0.010 | 1.200 | 1.200 | 1.200 |
| Thickness of surface rubber layer S (mm) | | 0.008 | 0.010 | 0.200 | 0.500 | 1.000 | 1.200 | 0.500 | 0.500 | 0.010 | 0.495 | 1.000 |
| On-ice performance | Newly produced state | 103 | 103 | 105 | 115 | 110 | 105 | 115 | 107 | 85 | 80 | 75 |
| | after 200km drive | 100 | 102 | 104 | 114 | 110 | 105 | 114 | 110 | 98 | 82 | 76 |
| | after 500km drive | 100 | 100 | 100 | 110 | 111 | 107 | 110 | 100 | 100 | 84 | 78 |

Table 1 shows that all of the inventive tires 1 to 16 have better on-ice performance at the initial stage of use (newly-produced state) than that of the conventional tire and the comparative tires 1 to 5.

INDUSTRIAL APPLICABILITY

This disclosure provides a tire with a tread to which foamed rubber is applied that stably exhibits excellent on-ice performance from the beginning of its use.

REFERENCE SIGNS LIST

2: Carcass
3: Belt
3a, 3b: Inclined belt layer
4: Circumferential belt
5: Circumferential groove
6: Tread
9: Land portion
10, 20: Tire
B: Base portion
C: Cap portion
I: Inner rubber layer
S: Surface rubber layer

## Claims

1. A tire (10) comprising: on a tread (6) of the tire, a surface rubber layer (S) forming at least a ground contact surface of the tread (6); and an inner rubber layer (I) that is adjacent to inward of the surface rubber layer (S) in the tire radial direction and is formed of foamed rubber, wherein an elastic modulus of rubber of the surface rubber layer $M_s$ is lower than an elastic modulus of rubber of the inner rubber layer $M_i$
**characterized in that** the surface rubber layer (S) is made of a non-foaming rubber.

2. The tire (10) according to claim 1, wherein a ratio of the elastic modulus of rubber of the surface rubber layer $M_s$ to the elastic modulus of rubber of the inner rubber layer $M_i$, $M_s/M_i$, is 0.01 or more and less than 1.0.

3. The tire (10) according to claim 1 or 2, wherein the surface rubber layer (S) has a thickness of 0.01 mm or more and 1.0 mm or less.

4. The tire (10) according to any one of claims 1 to 3, wherein the tread (6) has a stacked structure in which a cap portion (C) that is adjacent to outward of a base portion (B) in the tire radial direction and forms at least a ground contact surface of the tread (6) is disposed, and the cap portion (C) includes the surface rubber layer (S) and the inner rubber layer (I).

## Patentansprüche

1. Reifen (10), der Folgendes umfasst: auf einer Lauffläche (6) des Reifens eine Oberflächengummilage (S), die wenigstens eine Bodenberührungsfläche der Lauffläche (6) bildet, und eine innere Gummilage (I), die in der Reifenradialrichtung von der Oberflächengummilage (S) nach innen benachbart ist und aus geschäumtem Gummi hergestellt ist, wobei ein Elastizitätsmodul des Gummis der Oberflächengummilage $M_s$ niedriger ist als ein Elastizitätsmodul des Gummis der inneren Gummilage $M_i$,
**dadurch gekennzeichnet, dass** die Oberflächengummilage (S) aus einem nichtschäumenden Gummi hergestellt ist.

2. Reifen (10) nach Anspruch 1, wobei ein Verhältnis des Elastizitätsmoduls des Gummis der Oberflächengummilage $M_s$ zu dem Elastizitätsmodul des Gummis der inneren Gummilage $M_i$, $M_s/M_i$, mehr als 0,01 und weniger als 1,0 beträgt.

3. Reifen (10) nach Anspruch 1 oder 2, wobei die Oberflächengummilage (S) eine Dicke von 0,01 mm oder mehr und 1,0 mm oder weniger hat.

4. Reifen (10) nach einem der Ansprüche 1 bis 3, wobei die Lauffläche (6) eine gestapelte Struktur hat, in der ein Deckabschnitt (C), der in der Reifenradialrichtung von einem Basisabschnitt (B) nach außen benachbart ist und wenigstens eine Bodenberührungsfläche der Lauffläche (6) bildet, angeordnet ist, und der Deckabschnitt (C) die Oberflächengummilage (S) und die innere Gummilage (I) einschließt.

## Revendications

1. Bandage pneumatique (10) comprenant : sur une bande de roulement du bandage pneumatique (6), une couche de gomme de surface (S) formant au moins une surface de contact au sol de la bande de roulement (6) ; et une couche de gomme interne (I) adjacente à l'intérieur de la couche de gomme de surface (S), dans la direction radiale du bandage pneumatique, et composée de caoutchouc mousse, dans lequel un module d'élasticité de la couche de gomme de surface $M_s$ est inférieur à un module d'élasticité de la couche de gomme interne $M_i$ ;
**caractérisé en ce que** la couche de gomme de surface (S) est composée de caoutchouc non moussant.

2. Bandage pneumatique (10) selon la revendication 1, dans lequel un rapport entre le module d'élasticité du caoutchouc de la couche de gomme de surface $M_s$ et le module d'élasticité du caoutchouc de la couche de gomme interne $M_i$, $M_s/M_i$ correspond à 0,01 ou à plus ou moins de 1,0.

3. Bandage pneumatique (10) selon les revendications 1 ou 2, dans lequel la couche de gomme de surface (S) a une épaisseur de 0,01 mm ou plus et de 1,0 mm ou moins.

4. Bandage pneumatique (10) selon l'une quelconque des revendications 1 à 3, dans lequel la bande de roulement (6) comporte une structure empilée dans laquelle est disposée une partie de chape (C) adjacente à l'extérieur d'une partie de base (B), dans la direction radiale du bandage pneumatique, et forme au moins une surface de contact au sol de la bande de roulement (6), la partie de chape (C) incluant la couche de gomme de surface (S) et la couche de gomme interne (I).

# FIG. 1

*FIG. 2*

*FIG. 3*

**EP 2 987 651 B1**

**Patent documents cited in the description**

- JP 2005041924 A
- JP 2007131084 A
- US 5840137 A
- JP H05147412 A